# EUROPEAN PATENT APPLICATION

(11) **EP 3 967 937 A1**
(43) Date of publication of application: **16.03.2022**
(21) Application number: 20195252.0
(22) Date of filing: 09.09.2020
(51) Int. Cl.: F24F 1/0047, F24F 5/00, F24F 11/65, F24F 11/46

(54) **SYSTEM AND METHOD FOR TEMPERATURE MANAGEMENT OF BUILDINGS**

(71) Applicant: EcoPhaser Fejlesztési Korlatolt Felelosségu Tarsasag, 1145 Budapest (HU)
(72) Inventor: Károlyi, Gergely, 1145 Budapest (HU); Lukács, Dávid, 08019 Barcelona (ES)
(74) Representative: Danubia Patent & Law Office LLC

(57) **Abstract**

The present invention relates to a system for temperature management of buildings, wherein the system comprises false ceiling panels (1), wherein a phase-changing material (11) contained in envelopes (12) is arranged on or in the false ceiling panels (1); temperature sensors (2) having communication units (21) for transmitting temperature measurement data; a HVAC unit (4) for providing heated or cooled air flow; a central control unit (3), having a processor, memory and communication means for data communication with the communication units (21) and with the HVAC unit (4); wherein the temperature sensors (2) are arranged in direct contact with the surface of the envelopes (12). The present invention further relates to a method for temperature management of buildings, wherein said method comprises obtaining temperature data from the surface of envelopes (12) filled with phase-changing material (11) and controlling a HVAC unit (4) at least in part on the basis of said temperature data.

## Description

The present invention relates to a system for temperature management of buildings.

The temperature management of a building is a complex task, requiring complex solutions, including heating, ventilation and air conditioning (HVAC) technologies. In an optimal case, a building is designed with considerations regarding temperature management, but often an already existing building has to be upgraded with an optimized temperature management system in order to comply with expectations for the comfort of occupants, work environments and energy efficiency, especially lately. Modern HVAC systems are mostly automated and controlled by a central unit based on some input data and some preset rules for activation/deactivation of its active elements.

Several solutions are available on the market offering different approaches for temperature management of buildings with varying efficiency, but further improvement of their efficiency, reduction of installation costs and improved comfort of occupants are always sought.

The US Patent No. US 10,203,674 discloses a system and method for optimizing the operation of a HVAC system of a building by a digital computer. The method includes obtaining data regarding indoor temperature, the load of the HVAC system, power output of a photovoltaic energy source and solar irradiation either as actual measurements, simulations or forecasted data, and subsequently calculating an optimized operation of the HVAC system on the basis of certain constraints for the operation and relevant parameters of the building, particularly thermal mass, thermal conductivity and generally the heat loss or gain of the building to/from the environment via walls and windows.

The disclosed system, while provides a general control system, fails to take into account special improvements utilized for thermal management of buildings, particularly the use of phase-changing materials as heat storage media.

The document No. US20190242611A1 discloses a ceiling system for a building. The system comprises suspended false ceiling panels optionally carrying phase changing materials, and an optimized air flow system for improving occupants' comfort. The air flow system is designed to include a forced air flow and an induced air flow and so that the air flow provides improved heat transfer between the flowing air and the ceiling panels. The high heat storing capacity of the phase changing material prevents quick changes of temperature in the room, thus improving user comfort.

There are several systems utilizing phase changing materials (from now on: PCM) in a similar setup, i.e. as ceiling panels for improved heat storage capacity. The latent heat of the phase change of the material at a relevant temperature, typically around room temperature, e.g. 21.7°C for certain paraffin-based mixtures, provides the PCM-containing ceiling panels with an ability to store and release a great amount of heat for only a few degrees of temperature change.

The prior art solutions fail to take into account that said capability of the PCM panels is utilized to the full extent only if the PCM in the panels is completely refreezed (for cold storage) or completely remelted (for heat storage) between two consecutive uses, e.g. refreezed in the night after a hot day. Heat management systems based on ventilation solutions without active cooling (e.g. ventilation in the night to refreeze the PCM without artificial cooling of the ventilation air) are proposed in the prior art, but ventilation by itself is mostly insufficient and thus allows the utilization of only a fraction of the heat storage capacity of the PCM. The main reason for the insufficiency is that heat transfer between air and the ceiling panels is governed by the temperature difference between the air and the contacted panel surface. For example a full night with a temperature 1°C below the freezing temperature of the PCM is not sufficient for completely freezing the PCM if it was fully melted during the day, when the air of the room where the PCM panels are used is usually several degrees warmer than the ideal room temperature in hot climates and also in temperate climates in the summer.

Active control systems accounting for thermal mass of building materials and potentially of phase changing materials also fail to utilize the capabilities of PCMs for several reasons. Firstly, because the modelling of a PCM as heat storage is completely different from modelling heat storage of materials not changing phases in the relevant temperature range, thus the PCM mass may not be just added to the thermal mass of other elements (building materials, furniture, etc.). Secondly because these systems lack the means for providing relevant input data for even attempting such modelling. And thirdly, because the air conditioning means are generally not suitable for heating/cooling the PCMs specifically, i.e. in a targeted manner. Conventional HVAC systems cool (or warm) the whole air content of a room, while the temperature of the air directly contacting the PCM-containing false ceiling is the most important factor in the heat transfer. In case of cooling a room, the cooler and thus denser air collects in the bottom of the room, while warmer and thus less dense air rises to the ceiling, which greatly reduces the efficiency of refreezing the PCM in the false ceiling. Therefore even the thermal management systems trying to accounting for the heat storage capacity of PCMs fail to utilize this factor for the full effect.

An object of the present invention is to reduce or eliminate the drawbacks of the prior art solutions by providing a system and method for temperature control of a building with improved energy efficiency, reduced installation costs and improved user comfort.

The core of the inventive idea is that the efficiency of a temperature management system for buildings may be greatly improved by utilizing PCMs, actively monitoring the temperature of the PCMs, modelling the energy stored in the PCMs based on the monitoring data, and actively cooling/heating the PCMs in a targeted manner based on the model.

Accordingly, the above objects are achieved by providing a system according to Claim 1. Preferred exemplary embodiments of the system are set out in the dependent claims. The above objects are achieved on the other hand by a method according to Claim 14. Preferred exemplary variants of the method are described in the dependent claims.

In what follows, the invention, especially preferred exemplary embodiments thereof are described in detail with reference to the accompanying drawings, wherein
- Figure 1A is a block diagram of a preferred embodiment of the system according to the invention;
- Figure 1B is a block diagram of a further preferred embodiment of the system according to the invention;
- Figure 1C is a block diagram of a further preferred embodiment of the system according to the invention;
- Figure 2 shows a preferred embodiment of an outlet arrangement of the system according to the invention;
- Figure 3 shows an exemplary arrangement of the system according to the invention in a building with an office space that is divided by false ceiling panels to an occupied space and a plenum space above the occupied space;
- Figure 4 shows a sectional perspective view of the PCM panel preferably used in the system according to the invention.

In the drawings like reference numbers denote like elements.

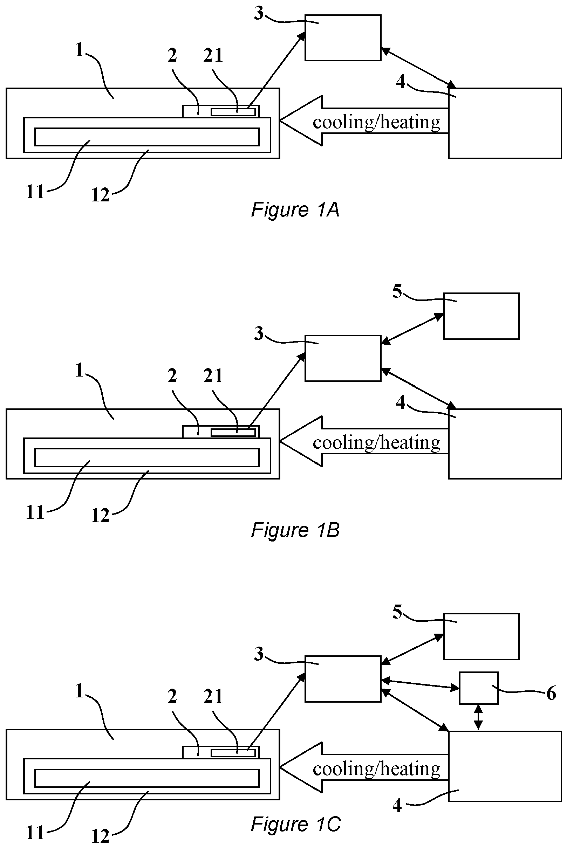

Figure 1 is a block diagram of a preferred embodiment of the system according to the invention. The system comprises false ceiling panels 1, having envelopes 12 filled with phase changing material (PCM) 11, temperature sensors 2 arranged in direct contact with the envelopes 12, a central control unit 3 and a HVAC unit 4. The temperature sensors 2 have a communication unit 21 for transferring temperature measurement data to the central control unit 3. The central control unit 3 comprises one or more processors, one or more memories and communication means for receiving temperature measurement data from the temperature sensors 2, and for sending control signals to the HVAC unit 4, and optionally for one- or two-way communication with further devices, such as for receiving operation data from HVAC unit, receiving user input from a user interface, sending measurement or operation data to a display device, receiving instructions from an external source, e.g. a server etc. Preferably, the communication units 21 of the temperature sensors 2 and the communication means of the central control unit 3 both comprise wireless communication units, e.g. Bluetooth or Wi-Fi, while the communication means of the central control unit 3 preferably also comprises wired communication means, e.g. an Ethernet port for connection to the Internet.

The one or more processors of the central control unit 3 are suitable for executing a computer program stored in the memory of the central control unit 3. The computer program of the central control unit 3 comprises a decision algorithm for controlling the HVAC unit 4 on the basis of a parameter set.

The envelopes 12 are preferably made of thin, pliable sheets of a material with high thermal conductivity while also having good mechanical properties and being relatively cheap, e.g. a plastic or a metal, most preferably aluminium. The envelopes 12 may also have rigid walls made of a material with high thermal conductivity. The envelopes 12 filled with PCM 11 may be integrated into the false ceiling panels 1 or may be arranged on top of the false ceiling panels 1. When the envelopes 12 have rigid walls and are integrated into the false ceiling panels 1, the envelopes 12 themselves may form the false ceiling panels 1. The false ceiling panels 1 may be installed in any residential or commercial building, e.g. residential houses or offices. The HVAC unit 4 preferably comprises a heating unit, a cooling unit and air transportation means, e.g. fans, air ducts and/or closable flow paths. The heating unit and cooling unit may be the same heat pump unit or they may be different devices. The HVAC unit 4 preferably comprises means for cooling the PCM 11 specifically, e.g. means for providing such a flow path for cooled air that directly contacts the envelopes 12 directly from above, or means for providing such a flow path for cooled air that directly contacts the false ceiling panels 1 from above or from below.

Figure 1B shows a block diagram of a further preferred embodiment of the system according to the invention. This embodiment comprises the same elements as the embodiment shown in Figure 1A, with the addition of an external server 5 communicating with the central control unit 3. This embodiment is particularly advantageous, when the central control unit 3 has low computing power and low electric consumption, and is suitable for executing a control algorithm, but not suited for computation-intensive tasks, such as numerical simulation of a building, evaluation of the energy-efficiency of the system or utilization of machine-learning for optimizing the operation. In this embodiment, the server 5 may perform all these computation-intensive tasks, formulate updated control parameter sets or updated decision trees for the control algorithm running on the central control unit 3 for providing improved energy-efficiency for the system. The server 5 may transmit updated program to the central control unit 3 on a regular basis, e.g. daily, while receive operation logs and other operation data, particularly measurements from the central control unit 3, which may serve further optimization and to a further iteration of the program, preferably through a self-teaching control loop that may be fully automated or may include some user-interaction, especially by a highly skilled operator or a technician.

A single server 5 may be connected to a plurality of central control units 3 and thus the centralization of the computation-intensive tasks may lead to further reduction in the installation cost of the systems by reducing the amount of the on-site equipment, while also reducing overall costs for a system including a lot of different spaces/buildings for a single central server 5, as well as the operation costs, because the centralized system allows a single operator to oversee and manage several buildings/spaces via the server 5. The server 5 may be arranged in the same building as the rest of the system according to the invention, or in a remote location.

Figure 1C shows a block diagram of a further preferred embodiment of the system according to the invention, comprising the same elements as the embodiment shown in Figure 1B, with the addition of smart thermostats 6. In this embodiment smart thermostats 6 are utilized for the direct control of certain elements of the HVAC unit, e.g. the indoor AC units. Smart thermostats 6 are different from simpler "programmable thermostats" in that they have wireless communication means for communicating with sensors and/or with the internet, and they have means for running a program that provides and application programming interface (API) for communication with further devices, e.g. smart watches, smartphones etc. Using smart thermostats 6 that are readily available on the market, e.g. under the trade names of Nest or Tado, allows simple establishment of a link between the central control unit 3 and the HVAC system, which is particularly advantageous when a pre-existing HVAC system is to be retrofitted/upgraded with the intelligent control system according to the present invention. In this embodiment, the smart thermostat 6 receives input from the central control unit 3 through its API and directly controls certain elements of the HVAC unit 4, particularly the active units of the HVAC unit 4 that are usually controlled by thermostats, especially the indoor AC unit, while optional further elements of the HVAC unit 4 can be controlled directly by the central control unit 3. Figure 1C also shows the presence of a server 5, but it is not necessary to use a server 5 when smart thermostats 6 are used, it is merely a preferred embodiment.

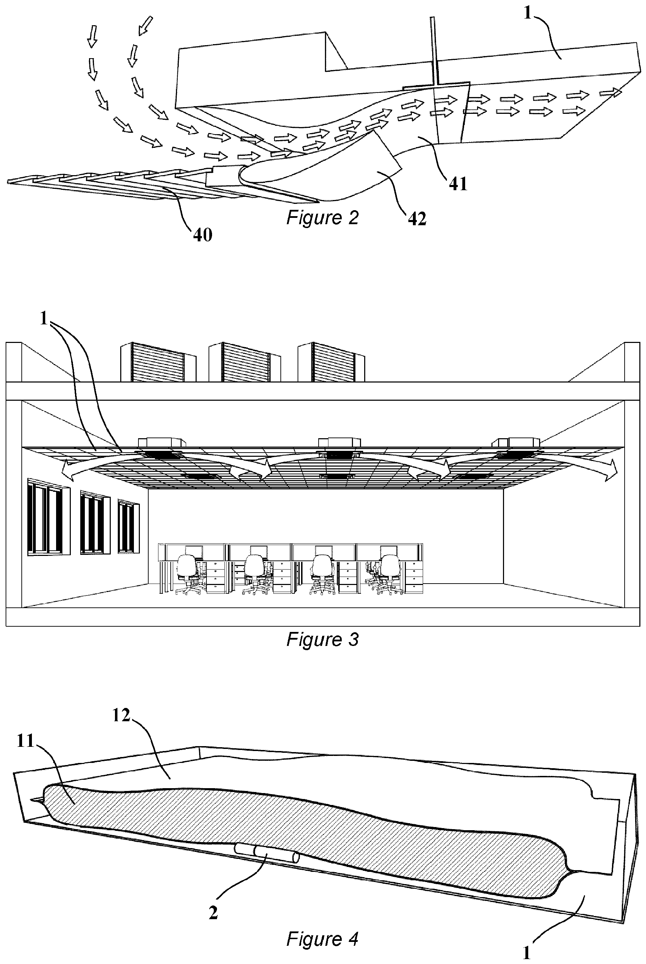

Figure 2 shows a preferred embodiment of an outlet arrangement of the system according to the invention. Suspended false ceiling systems define two separated spaces in a room: a plenum space above the false ceiling panels 1 and the occupied space below the false ceiling panels 1. Efficient cooling of the PCM 11 in the false ceiling panels 1 may be performed by providing direct contact between a cooled air flow and the false ceiling panels 1 (or preferably the envelopes 12) either from the top or from the bottom. Outlet arrangement may be arranged at the outlets of air ducts of the HVAC unit 4 and/or at passages connecting the plenum space with the occupied space.

The outlet arrangement shown in Figure 2 comprises shutters 40, fixed deflector elements 41 and tiltable deflector blades 42. Shutters 40 have a closed and an opened position and are preferably arranged so that in the open position, they provide an air flow to the occupied space with no or minimal interaction with the false ceiling panels 1 to provide direct heating/cooling of the occupied space when active heating/cooling of the PCM 11 is not necessary or not feasible. Tiltable deflector blades 42 are arranged so that the air flow coming from the HVAC unit 4 or from the plenum space is selectively directed on the basis of the current tilt angle of the tiltable deflector blades 42 either substantially only onto the bottom surface of the false ceiling panels 1 or at least to a substantial portion directly into the occupied space with different directions similarly to conventional indoor AC units.

A fluid flow in the vicinity and parallel to a surface tends to 'adhere' to said surface, i.e. to follow the surface, this is the so-called Coanda effect. The Coanda effect occurs if certain physical conditions characterizing the fluid flow are met, including but not limited to the width of the fluid jet, the curvature of radius of said surface, and the Reynolds number, the latter being derived from the density of the fluid, the flow speed, the diameter of the flow channel, the dynamic and kinematic viscosity of the fluid. Fixed deflector elements 41 are preferably arranged to reduce flow resistance by reducing turbulent flow and to facilitate adherence of the air flow to the false ceiling.

The tiltable deflector blades 42 and the fixed deflector elements 41 are preferably designed to provide an air flow at the surface, particularly the bottom surface, of the false ceiling panels 1, where the air flow adheres to the surface due to the Coanda effect. This provides efficient heat transfer between the air flow and the PCM 11, while also directly cooling and circulating the air within the occupied space. This improves the comfort of the occupants via two mechanisms. Firstly, complete refreezing the PCM 11 in the night, i.e. when there are no occupants in the room, increases the amount of cold stored in the PCM 11 and thus reduces daytime AC usage, which often significantly reduces the occupant's comfort, especially when 'cold spots' are formed due to the aerodynamic characteristics of the room and the AC system. Secondly, even when the AC system is used with occupants present in the room, providing heat transfer between the cool air flow and the PCM 11 and forcing the air flow to stay at the ceiling for some time, the cool air flow is warmed to some extent before impacting on the occupants of the room and the formation of 'cold spots' within the room is also reduced, therefore the comfort of occupants is increased.

When the shutters 40 are closed and the tiltable deflector blades 42 are brought to their topmost position where they contact the fixed deflector elements 41, air is prevented from entering the occupied space through this outlet arrangement. When all or most of the outlet arrangements are closed the cooled air outputted from the HVAC unit 4 stays in the plenum space for longer - possibly even indefinitely - and the difference between the density of cool and warm air cause the cooler air to concentrate on the bottom of the plenum space and thus good heat transfer between the PCM 11 and the cooled air is provided for freezing the PCM 11. This is particularly advantageous, when the occupied space is at ideal temperature and thus its further cooling is not required, but the PCM 11 is ought to be refreezed due to cheaper availability of the cooling (electric energy is generally cheaper during nights or when excess is produced from renewable sources, such as by wind or solar power).

In a preferred embodiment the cooled air output may be switched between the occupied space and the plenum space according to a direct user input or the control signals of the central control unit 3. The arrangement of the tiltable deflector blades 42 and the fixed deflector elements 41 may be arranged at (or as part of) a conventional indoor AC unit and the means of switching said output may be the swinging or pivoting the deflector blades of the AC unit.

Though the embodiment shown in Figure 2 comprises both shutters 40 and tiltable deflector blades 42, it should understood that this only a preferred embodiment, providing the most control options, but more simple designs are also sufficient for providing the advantageous effect according to the invention. For example, it is possible to provide only fixed outlet elements providing the Coanda effect, without active control of any of them, or providing fixed elements and only one of tiltable deflector blades 42 or shutters 40.

Figure 3 shows an exemplary arrangement of the system according to the invention in a building with an office space that is divided by false ceiling panels 1 to an occupied space and a plenum space above the occupied space. The plenum space and the occupied space are communicated with each other through outlet arrangements, preferably by outlet arrangements as shown in Figure 2. Arrows indicate the substantial direction of the cooled air flow near the bottom of the false ceiling panels 1. Using outlet arrangements as shown in Figure 2, the Coanda-effect ensures that the cooled air flow stays in direct contact with the false ceiling panels 1 in an area as large as possible, thus ensures more efficient targeted cooling of the PCM 11.

Figure 4 shows a preferred embodiment of the false ceiling panels 1 to be used in the system according to the invention. In this embodiment the temperature sensors 2 are arranged on the outer bottom surface of the envelope 12, which is arranged within a false ceiling panel 1. Thus the temperature sensor 2 is arranged between the envelope 12 and the false ceiling panel 1. This arrangement ensures that the temperature sensors 2 provide substantially real-time data about the temperature of the PCM 11, because the material of the envelope 12 is made of a material with high thermal conductivity and is in direct contact with the PCM 11 and thus the temperature of the envelope 12 is substantially equal to the temperature of the PCM 11.

The system according to the invention is preferably configured for obtaining further temperature data from further sources, e.g. indoor temperature sensors, outdoor temperature sensors and weather forecast. These indoor and outdoor sensors may be included in the system. The computer program of the central control unit 3 is preferably adapted to use date and time, as well as calendar data, e.g. to account for increased/decreased rate of use of certain spaces during weekdays, weekends and holidays.

The method according to the invention for temperature management of buildings comprises obtaining temperature data at least in part from the surface of envelopes 12 filled with a PCM 11 and controlling a HVAC unit 4 at least in part on the basis of said temperature data. This allows more accurate modelling and/or controlling of the heating and cooling of the building and thus increases heating/cooling efficiency, resulting in reduction of heating/cooling costs.

The method according to the invention preferably comprises obtaining further pieces of temperature data, e.g. from an indoor space, outdoors and a weather forecast, and further non-temperature data, e.g. occupancy of a room, calendar data, current electric energy cost, etc. The aforementioned additional temperature data may be used for further increasing the accuracy of modelling and increasing the efficiency of the controlling. The non-temperature data may be used for increasing controlling efficiency and increases user comfort. For example, the HVAC unit 4 may be scheduled to cool the PCM 11 and the corresponding room in the night, when there are no occupants in the room, the electricity is cheaper, and the efficiency of a heat pump that is often used in HVAC systems is also higher due to the lower ambient temperature. When the room is expected to be unoccupied for more than one day (e.g. weekends or holidays), the HVAC unit 4 may be kept offline so that unnecessary energy use is reduced - either by automatic control system or by manual commands.

The method according to the invention preferably comprises using a self-teaching control loop running on a computer for optimizing energy consumption of the HVAC unit 4 by managing energy storage in the PCM 11 via freezing and melting of the PCM 11. One great advantage of the self-teaching control loop is that it is able to manage more parameters, possibly dozens or hundreds, for the optimization that vastly exceeds human capabilities. Furthermore, the looped, self-teaching nature of the control algorithm allows not only calculations on the basis of more data, but also allows discovery and/or compensation of features of the building that were previously unknown or were known inaccurately or that had been changed over time. These may be the change of internal air flow characteristics and change of heat capacity (or thermal mass) of the interiors for example due to rearrangement of furniture; changed heat transfer characteristics through windows or walls due to replacements or renovations changing the thermal insulation; deterioration of thermal insulation over time; snow cover on the roof temporarily adding thermal insulation; seasonal or progressive change in solar irradiation due to change of seasons or growth of outdoor vegetation providing more and more shading over time.

The method according to the invention preferably includes performing model calculations specifically for determining the amount of energy stored in the PCM 11 on the basis of temperature data obtained from the surface of the envelopes 12 filled with PCM 11.

Each of the examples provided above serve the better understanding of the invention and none of them shall be understood in a limiting manner. Numerous variants and combinations of the above examples may be conceived by a skilled person within the scope of protection on the basis of the above teaching without exercising further inventive step.

## Claims

1. A system for temperature management of buildings, the system comprising:
- false ceiling panels (1), wherein phase-changing material (11) contained in envelopes (12) is arranged on or in the false ceiling panels (1);
- temperature sensors (2) having communication units (21) for transmitting temperature measurement data;
- a HVAC unit (4) for providing heated or cooled air flow;
- a central control unit (3), having a processor, memory and communication means for data communication with the communication units (21) and with the HVAC unit (4);
**characterized in that**
the temperature sensors (2) are arranged in direct contact with the surface of the envelopes (12).

2. The system according to claim 1, **characterized by** comprising outlet arrangements for directing heated or cooled air flow onto a bottom surface of the false ceiling panels (1).

3. The system according to claim 2, **characterized in that** the HVAC unit (4) comprises air ducts and the outlet arrangements are arranged as outlets of the air ducts.

4. The system according claims 2 or 3, **characterized in that** the outlet arrangements comprising remotely controllable shutters (40) and/or remotely controllable tiltable deflector blades (42) and/or fixed deflector elements (41).

5. The system according to claim 4, **characterized in that** the outlet arrangements comprising tiltable deflector blades (42) that are arranged at substantially the same height as the false ceiling panels (1) and tiltable deflector blades (42) having an orientation directing the air flow into the plenum space above the false ceiling panels (1) and having an orientation directing the air flow to a space below the false ceiling panels (1).

6. The system according to claim 4, **characterized in that** the outlet arrangements comprising tiltable deflector blades (42) having more than one orientation directing the air flow to a space below the false ceiling panels (1), wherein one of said orientations directs air flow substantially parallel with the false ceiling panels (1) and at least one of said orientations directs air flow not parallel with the false ceiling panels (1).

7. The system according to any one of the preceding claims, **characterized in that** the memory of the central control unit (3) stores a computer program that when executed on the processor of the central control unit, controls the operation of the HVAC unit (4) at least in part on the basis of the temperature measurement data received from the temperature sensors (2).

8. The system according to claim 7, **characterized in that** the computer program comprises a self-teaching control loop for optimizing energy consumption of the HVAC unit (4) by managing energy storage in the phase-changing material (11) via freezing and melting of the phase-changing material (11).

9. The system according to claim 7, **characterized in that** the central control unit (3) is in data communication with a server (5), wherein said server runs a computer program comprising a self-teaching control loop for optimizing energy consumption of the HVAC unit (4) by managing energy storage in the phase-changing material (11) via freezing and melting of the phase-changing material (11).

10. The system according any one of claims 7 to 9, **characterized in that** the computer program executes model calculations for determining the amount of energy stored in the phase-changing material (11).

11. The system according to any one of claims 4 to 10, **characterized in that** the central control unit (3) is in direct controlling connection with the outlet arrangements.

12. The system according to any one of claims 4 to 11, **characterized in that** the central control unit (3) is in data communication with a smart thermostat (6) that provides an application programming interface and the central control unit (3) provides operation commands to the smart thermostat (6) via said application programming interface, wherein the smart thermostat (6) is in direct controlling connection with the HVAC unit (4) for controlling the operation of the HVAC unit (4) at least partially on the basis of input received from the central control unit (3) via said application programming interface.

13. The system according to any one of the preceding claims, **characterized in that** the envelopes (12) are made of a metal, preferably aluminium.

14. A method for temperature management of buildings, the method comprises:
- obtaining temperature data;
- controlling a HVAC unit (4) at least in part on the basis of said temperature data; **characterized in that** at least a portion of said temperature data is obtained from the surface of envelopes (12) filled with phase-changing material (11) and preferably further pieces of temperature data are obtained from at least one of an indoor space, outdoors and a weather forecast.

15. The method according to claim 14, **characterized in that** a self-teaching control loop is used for optimizing energy consumption of the HVAC unit (4) by managing energy storage in the phase-changing material (11) via freezing and melting of the phase-changing material (11) and preferably model calculations are performed for determining the amount of energy stored in the phase-changing material (11) on the basis of temperature data obtained from the surface of the envelopes (12) filled with phase-changing material (11).
